# EUROPEAN PATENT APPLICATION

(11) **EP 4 600 890 A2**
(43) Date of publication of application: **13.08.2025**
(21) Application number: 25184968.3
(22) Date of filing: 13.09.2022
(51) Int. Cl.: G06Q 30/06

(54) **SELF-DIRECTED COMPUTER SYSTEM VALIDATION**

(30) Priority: 13.09.2021 US 202117472875
(62) Divisional of application: 22195389.6
(71) Applicant: Dionex Corporation, Sunnyvale, CA 94085 (US)
(72) Inventor: QUINN, Shaun Anders, Dunbar (GB); GRULKE, Matthew A., Downingtown, 19335 (US); KENNY, Patrick Michael, Feeding Hills, 01030 (US)
(74) Representative: Boult Wade Tennant LLP

(57) **Abstract**

A system for self-directed computer system validation includes first logic to provide a graphical user interface to enable a user to select a set of selected requirements from a plurality of available requirements; second logic to select a set of procedures to satisfy the need to test against each of the requirements and document evidence of the outcomes and generate a set of documents for installing and configuring the system and test protocols including all methods and objects needed to validate the system; and third logic to provide the set of documents for installing and configuring the system and test protocols including all methods and objects needed to validate the system.

## Description

### FIELD

The present disclosure generally relates to the field of regulatory compliance including system and methods for self-directed computer system validation.

### INTRODUCTION

Before software products can be installed and operated within the so called GxP regulated industries, an organization that is bound by these regulations must have evidential proof that they have conducted appropriate testing. The testing must demonstrate the software does what they need it to do repeatedly and verify the software meets the controls stipulated by the regulations. In addition to technical elements, the end-user must generate processes to manage and control the system including any deficiencies and document all activities.

### SUMMARY

In a first aspect, a system for self-directed computer system validation can include first logic to provide a graphical user interface to enable a user to select a set of selected requirements from a plurality of available requirements; second logic to select a set of procedures to satisfy the need to test against each of the requirements and document evidence of the outcomes and generate a set of documents for installing and configuring the system and test protocols including all methods and objects needed to validate the system; and third logic to provide the set of documents for installing and configuring the system and test protocols including all methods and objects needed to validate the system.

In various embodiments of the first aspect, the first logic, the second logic, and the third logic can be implemented by a common computing device.

In various embodiments of the first aspect, at least one of the first logic, the second logic, and the third logic can be implemented by a computing device remote from the scientific instrument.

In various embodiments of the first aspect, at least one of the first logic, the second logic, and the third logic can be implemented by a user computing device.

In various embodiments of the first aspect, at least one of the first logic, the second logic, and the third logic can be implemented in the scientific instrument.

In various embodiments of the first aspect, the first logic can further include logic to identify requirements related to a selected requirement. In particular embodiments, the first logic can further include adding the related requirements to the set of selected requirements. In particular embodiments, the first logic can further include providing the user with an indication of the related requirements.

In various embodiments of the first aspect, the first logic can further include providing the user with an indication of conflicting requirements.

In various embodiments of the first aspect, the second logic can further include accessing a database to retrieve predefined sections of text and a predefined order to generate the set of documents.

In various embodiments of the first aspect, the second logic can further include building user management files for the system being validated.

In various embodiments of the first aspect, the third logic can further include providing a mechanism for payment prior to providing the set of documents. In particular embodiments, the third logic can further include providing a mechanism for reviewing at least a portion of the set of documents prior to payment.

In various embodiments of the first aspect, the system can further include a fourth logic to highlight changes in recent releases of an application and make recommendations on retesting or regression testing from within the customers already purchased documentation.

In various embodiments of the first aspect, the fourth logic can be further configured to advise on any new documentation or information that needs to be purchased.

In a second aspect, a method for self-directed computer system validation can include providing a graphical user interface to enable a user to select a set of selected requirements from a plurality of available requirements; selecting a set of procedures to satisfy the need to test against each of the requirements and document evidence of the outcomes and generate a set of documents for installing and configuring the system and test protocols including all methods and objects needed to validate the system; and providing the set of documents for installing and configuring the system and test protocols including all methods and objects needed to validate the system.

In various embodiments of the second aspect, the method for self-directed computer system validation can further include identifying requirements related to a selected requirement. In particular embodiments, the method for self-directed computer system validation can further include adding the related requirements to the set of selected requirements. In particular embodiments, the method for self-directed computer system validation can further include providing the user with an indication of the related requirements.

In various embodiments of the second aspect, the method for self-directed computer system validation can further include providing the user with an indication of conflicting requirements.

In various embodiments of the second aspect, the method for self-directed computer system validation can further include accessing a database to retrieve predefined sections of text and a predefined order to generate the set of documents.

In various embodiments of the second aspect, the method for self-directed computer system validation can further include providing a mechanism for payment prior to providing the set of documents. In particular embodiments, the method for self-directed computer system validation can further include providing a mechanism for reviewing at least a portion of the set of documents prior to payment.

In various embodiments of the second aspect, the set of documents can include user management files for the system being validated.

In various embodiments of the second aspect, the method for self-directed computer system validation can further include highlighting changes in recent releases of an application and making recommendations on retesting or regression testing from within already purchased documentation. In particular embodiments, the method for self-directed computer system validation can further include advising on any new documentation or information that needs to be purchased in response to a recent release of the application.

In various embodiments of the second aspect, one or more non-transitory computer readable media can have instructions thereon that, when executed by one or more processing devices of a system for self-directed computer system validation, can cause the system for self-directed computer system validation to perform the method of the second aspect.

In a third aspect, a self-directed computer system validation apparatus, can include first logic to receive the inputs, the inputs including a set of selected requirements from a plurality of available requirements; and second logic to generate the outputs based at least in part on the inputs, the outputs including documentation for installation and configuring the scientific instrument and test protocols including all methods and objects needed to validate the system.

In various embodiments of the third aspect, the first logic can receive the inputs from a user computing device.

In various embodiments of the third aspect, the first logic can receive the inputs in the form of a bulk upload or in the form of selections via a user interface.

In various embodiments of the third aspect, the second logic can further include building user management files for the system being validated.

In various embodiments of the third aspect, the outputs can further include changes in recent releases of an application and recommendations on retesting or regression testing.
Further aspects of the present disclosure as set forth in the following numbered clauses:-
Clause 1. A method for self-directed computer system validation, comprising:
   providing a graphical user interface to enable a user to select a set of selected requirements from a plurality of available requirements;
   selecting a set of procedures to satisfy the need to test against each of the requirements and document evidence of the outcomes and generate a set of documents for installing and configuring the system and test protocols including all methods and objects needed to validate the system; and
   providing the set of documents for installing and configuring the system and test protocols including all methods and objects needed to validate the system.
Clause 2. The method for self-directed computer system validation of clause 1, further comprising identifying requirements related to a selected requirement.
Clause 3. The method for self-directed computer system validation of clause 1, further comprising adding the related requirements to the set of selected requirements.
Clause 4. The method for self-directed computer system validation of clause 2, further comprising providing the user with an indication of the related requirements.
Clause 5. The method for self-directed computer system validation of clause 1-4, further comprising providing the user with an indication of conflicting requirements.
Clause 6. The method for self-directed computer system validation of clause 1-5, further comprising accessing a database to retrieve predefined sections of text and a predefined order to generate the set of documents.
Clause 7. The method for self-directed computer system validation of clause 1-6, further comprising providing a mechanism for payment prior to providing the set of documents.
Clause 8. The method for self-directed computer system validation of clause 7, further comprising providing a mechanism for reviewing at least a portion of the set of documents prior to payment.
Clause 9. The method for self-directed computer system validation of clause 1-8, wherein the set of documents include user management files for the system being validated.
Clause 10. The method for self-directed computer system validation of clause 1-9, further comprising highlighting changes in recent releases of an application and making recommendations on retesting or regression testing from within already purchased documentation.
Clause 11. The method for self-directed computer system validation of clause 10, further comprising advising on any new documentation or information that needs to be purchased in response to a recent release of the application.
Clause 12. One or more non-transitory computer readable media having instructions thereon that, when executed by one or more processing devices of a system for self-directed computer system validation, cause the system for self-directed computer system validation to perform the method of clause 1-11.
Clause 13. A self-directed computer system validation apparatus, comprising:
   first logic to receive the inputs, the inputs including a set of selected requirements from a plurality of available requirements; and
   second logic to generate the outputs based at least in part on the inputs, the outputs including documentation for installation and configuring the scientific instrument and test protocols including all methods and objects needed to validate the system.
Clause 14. The self-directed computer system validation apparatus of clause 13, wherein the first logic is to receive the inputs from a user computing device.
Clause 15. The self-directed computer system validation apparatus of clause 13, wherein the first logic is to receive the inputs in the form of a bulk upload or in the form of selections via a user interface.
Clause 16. The self-directed computer system validation apparatus of clause 13-15, wherein the second logic further includes building user management files for the system being validated.
Clause 17. The self-directed computer system validation apparatus of clause 13-16, wherein the outputs further include changes in recent releases of an application and recommendations on retesting or regression testing.

### The following numbered clauses show further illustrative examples only:

1. A system for self-directed computer system validation, comprising:
   first logic to provide a graphical user interface to enable a user to select a set of selected requirements from a plurality of available requirements;
   second logic to select a set of procedures to satisfy the need to test against each of the requirements and document evidence of the outcomes and generate a set of documents for installing and configuring the system and test protocols including all methods and objects needed to validate the system; and
   third logic to provide the set of documents for installing and configuring the system and test protocols including all methods and objects needed to validate the system.
2. The system for self-directed computer system validation of clause 1, wherein the first logic, the second logic, and the third logic are implemented by a common computing device.
3. The system for self-directed computer system validation of any of clauses 1-2, wherein at least one of the first logic, the second logic, and the third logic are implemented by a computing device remote from the scientific instrument.
4. The system for self-directed computer system validation of any of clauses 1-3, wherein at least one of the first logic, the second logic, and the third logic are implemented by a user computing device.
5. The system for self-directed computer system validation of any of clauses 1-4, wherein at least one of the first logic, the second logic, and the third logic are implemented in the scientific instrument.
6. The system for self-directed computer system validation of clauses 1-5, wherein the first logic further includes logic to identify requirements related to a selected requirement.
7. The system for self-directed computer system validation of clause 6, wherein the first logic further includes adding the related requirements to the set of selected requirements.
8. The system for self-directed computer system validation of clause 6, wherein the first logic further includes providing the user with an indication of the related requirements.
9. The system for self-directed computer system validation of clauses 1-8, wherein the first logic further includes providing the user with an indication of conflicting requirements.
10. The system for self-directed computer system validation of clauses 1-9, wherein the second logic further includes accessing a database to retrieve predefined sections of text and a predefined order to generate the set of documents.
11. The system for self-directed computer system validation of clauses 1-10, wherein the second logic further includes building user management files for the system being validated.
12. The system for self-directed computer system validation of clauses 1-11, wherein the third logic further includes providing a mechanism for payment prior to providing the set of documents.
13. The system for self-directed computer system validation of clause 12, wherein the third logic further includes providing a mechanism for reviewing at least a portion of the set of documents prior to payment.
14. The system for self-directed computer system validation of clauses 1-13, further comprising a fourth logic to highlight changes in recent releases of an application and make recommendations on retesting or regression testing from within the customers already purchased documentation.
15. The system for self-directed computer system validation of clauses 1-14, wherein the fourth logic is further configured to advise on any new documentation or information that needs to be purchased.

### DRAWINGS

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1 is a block diagram of an example self-directed computer system validation module for performing support operations, in accordance with various embodiments.
FIG. 2 is a flow diagram of an example method of performing support operations, in accordance with various embodiments.
FIG. 3 is an example of a graphical user interface that may be used in the performance of some or all of the support methods disclosed herein, in accordance with various embodiments.
FIG. 4 is a block diagram of an example computing device that may perform some or all of the self-directed computer system validation methods disclosed herein, in accordance with various embodiments.
FIG. 5 is a block diagram of an example self-directed computer system validation system in which some or all of the self-directed computer system validation methods disclosed herein may be performed, in accordance with various embodiments.

### DETAILED DESCRIPTION

Disclosed herein are systems for self-directed computer system validation, as well as related methods, computing devices, and computer-readable media. For example, in some embodiments, a system for self-directed computer system validation can include first logic to provide a graphical user interface to enable a user to select a set of selected requirements from a plurality of available requirements; second logic to select a set of procedures to satisfy the need to test against each of the requirements and document evidence of the outcomes; and third logic to provide documentation for installing and configuring the system and test protocols including all methods and objects needed to validate the system.

Typically, regulated organizations embark on time consuming projects that often require a collaboration of professionals with expertise in different disciplines such as regulations, software, IT infrastructure, Business Analysis, Engineering, and Laboratory Techniques. It is a knowledge exchange out of which they generate documentation. The current solution is to start with paper-based templates and then the individuals involved add details to generate the internationally recognized set of deliverables. The self-directed computer system validation embodiments disclosed herein may achieve improved performance relative to conventional approaches. The self-directed computer system validation embodiments can guide the user to automatically generate the aforementioned internationally recognized deliverables for a specific business application. For example, the time required to develop the necessary documentation can be significantly shortened by reducing the need for input from and shared document development with various experts.

In the following detailed description, reference is made to the accompanying drawings that form a part hereof wherein like numerals designate like parts throughout, and in which is shown, by way of illustration, embodiments that may be practiced. It is to be understood that other embodiments may be utilized, and structural or logical changes may be made, without departing from the scope of the present disclosure. Therefore, the following detailed description is not to be taken in a limiting sense.

Various operations may be described as multiple discrete actions or operations in turn, in a manner that is most helpful in understanding the subject matter disclosed herein. However, the order of description should not be construed as to imply that these operations are necessarily order dependent. In particular, these operations may not be performed in the order of presentation. Operations described may be performed in a different order from the described embodiment. Various additional operations may be performed, and/or described operations may be omitted in additional embodiments.

For the purposes of the present disclosure, the phrases "A and/or B" and "A or B" mean (A), (B), or (A and B). For the purposes of the present disclosure, the phrases "A, B, and/or C" and "A, B, or C" mean (A), (B), (C), (A and B), (A and C), (B and C), or (A, B, and C). Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices.

The description uses the phrases "an embodiment," "various embodiments," and "some embodiments," each of which may refer to one or more of the same or different embodiments. Furthermore, the terms "comprising," "including," "having," and the like, as used with respect to embodiments of the present disclosure, are synonymous. When used to describe a range of dimensions, the phrase "between X and Y" represents a range that includes X and Y. As used herein, an "apparatus" may refer to any individual device or collection of devices. The drawings are not necessarily to scale.

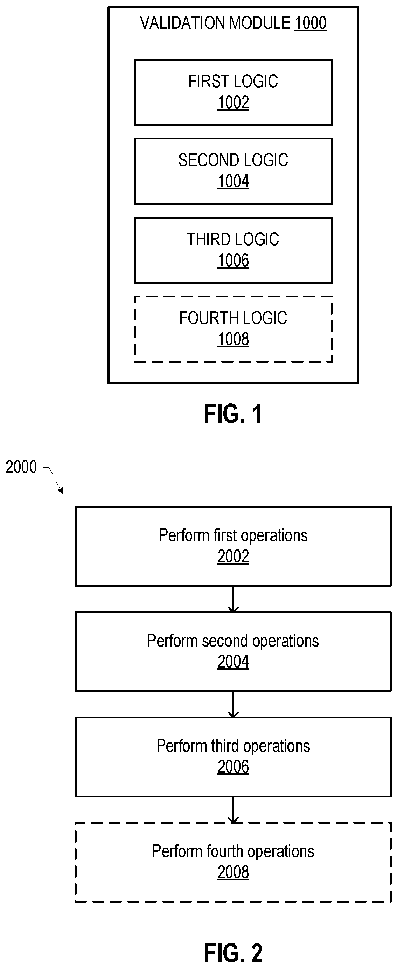

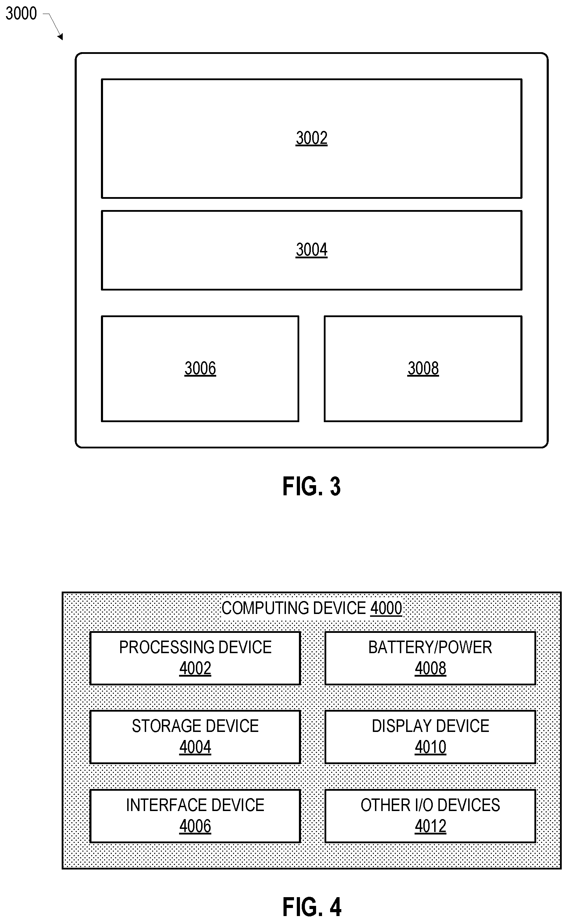

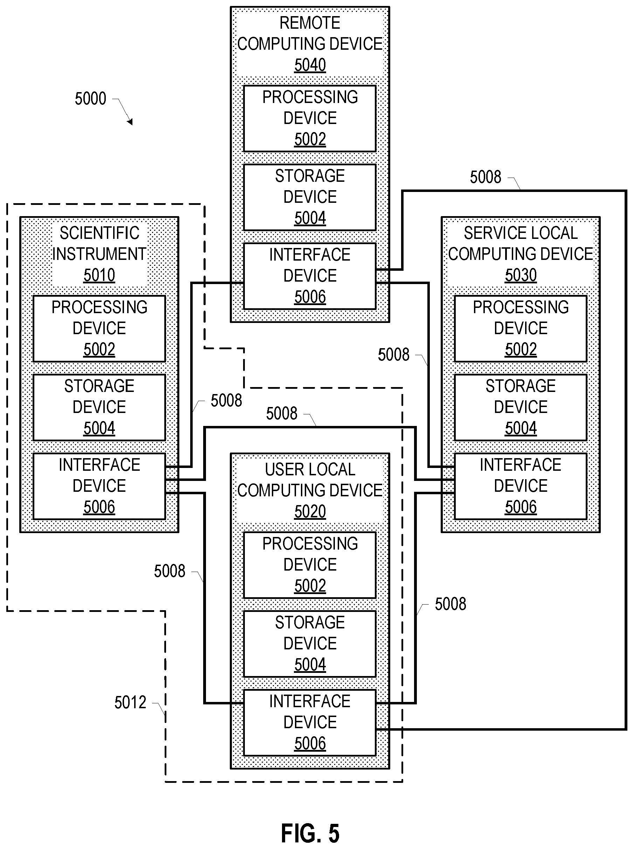

FIG. 1 is a block diagram of a computer system validation module 1000 for performing validation operations, in accordance with various embodiments. The computer system validation module 1000 may be implemented by circuitry (e.g., including electrical and/or optical components), such as a programmed computing device. The logic of the computer system validation module 1000 may be included in a single computing device or may be distributed across multiple computing devices that are in communication with each other as appropriate. Examples of computing devices that may, singly or in combination, implement the computer system validation module 1000 are discussed herein with reference to the computing device 4000 of FIG. 4, and examples of systems of interconnected computing devices, in which the computer system validation module 1000 may be implemented across one or more of the computing devices, is discussed herein with reference to the system for self-directed computer system validation 5000 of FIG. 5.

The computer system validation module 1000 may include first logic 1002, second logic 1004, and third logic 1006. As used herein, the term "logic" may include an apparatus that is to perform a set of operations associated with the logic. For example, any of the logic elements included in the computer system validation module 1000 may be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" may refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices.

The first logic 1002 may provide a graphical user interface to enable a user to select a set of selected requirements from a plurality of available requirements. In various embodiments, the first logic 1002 can enable end-users to make their own decisions but within the boundaries and confines of what is possible for the business application and the regulations it has to operate within. Although the first logic 1002 may not expressly indicate to the end-user what those boundaries and confines are, the first logic 1002 can provide digital assistance and presents additional information to the end-user where they make conflicting selections.

In various embodiments, the first logic 1002 can direct the user as to dependencies between requirements, such as by visually drawing attention to and/or automatically selecting related requirements. In various embodiments, the first logic 1002 may change text color or background color around a related requirement, draw a circle or box around a related requirement, provide other visual indicator, or any combination thereof.

In various embodiments, the first logic 1002 can identify conflicting requirements, such as by identifying conflicting options when a first option is selected. For example, the first logic 1002 can gray the text, strike through the text, or otherwise indicating the conflicting option. In various embodiments, the first logic 1002 may prohibit selecting of an option that conflicts with a previously selected option. Alternatively, the first logic 1002 can provide information to inform the user when conflicting options are selected, such as by visually indicating the conflicting options and providing text to indicate why the options are in conflict, enabling the user to determine which option should be chosen.

In various embodiments, the first logic 1002 can make additional options available when prerequisite options are selected, such as by dynamically adding to the list. For example, certain instrument specific requirements may be populated only after the specific instrument is selected. In other examples, certain regulatory requirements may be populated depending on the regulatory regime selected.

The first logic 1002 can have a predefined list of requirements that represents the end-users and regulatory stipulations for the chosen business application. The end-user can select from the list during which they will be required to enter specific configurable details that are applicable to how they operate.

The second logic 1004 may select a set of procedures to satisfy the need to test against each of the requirements and document evidence of the outcomes and generate a set of documents for installing and configuring the system and test protocols including all methods and objects needed to validate the system. Based on the selections and configurable information, the second logic 1004 can automatically generate instructions including files necessary to apply the desired configuration of the business application. The second logic 1004 can generate User Requirement Specification, Installation Qualification documentation, Operational Qualification documentation, Performance Qualification documentation, System Manual, and Traceability Matrix documentation, or any combination thereof. The second logic 1004 can utilize the list of requirements and configuration options selected by the user and cross reference predefined sections of text and a predefined order to generate the final expected documentation. In various embodiments, a database can be used to store the predefined sections of text and predefined ordering related to the plurality of available requirements.

In various embodiments, the second logic 1004 can build user management files for system being validated. The user management files can configure security and access control permissions for the system being validated.

In various embodiments, the second logic 1004 can generate a recommended deployment topology. The recommended deployment topology may indicate a number of servers needed and how the servers are distributed with relation to the scientific instruments and each other. The number of servers may be a function of the number of scientific instruments specified. The distribution of the servers may be a function of how the scientific instruments are deployed as well as requirements for availability and redundancy.

In various embodiments, the second logic 1004 can consolidate or remove duplicate or redundant procedures. For example, configuration or testing of a particular subsystem may be required to meet two or more selected requirements. Rather than including the instructions for configuration or testing of the particular subsystem multiple times, the second logic 1004 can provide one set of instructions for configuration or testing of the particular system rather than repeated those steps in multiple locations of the documentation.

The third logic 1006 may provide the documentation for installing and configuring the system and test protocols including all methods and objects needed to validate the system generated by the second logic 1004 to the user. In various embodiments, the third logic 1006 may make the set of documents available for download. Further, the third logic 1006 may provide a mechanism for payment prior to making the set of documents available. Additionally, the third logic 1006 may provide a mechanism for reviewing at least a portion of the set of documents prior to payment.

In various embodiments, the computer system validation module 1000 may further include fourth logic 1008. In various embodiments, the fourth logic 1008 can maintain a record of the end-user's selections and documentation. Additionally, the fourth logic 1008 can highlight changes in recent releases of the application and make recommendations on retesting or regression testing from within the customers already purchased documentation. The fourth logic 1008 can also advise on any new documentation or information that needs to be purchased.

In various embodiments, the second logic 1004 can generate methods for performing diagnostic or validation tests on a scientific instrument. The third logic can provide the methods to the user, allowing the user to transfer the methods to the software running the instrument. Additionally, the user can instruct the software to perform the method. The method can generate a result that can be uploaded to the computer system validation module 1000, after which the second logic can update documents or generate additional documents to reflect completion of the methods and verification of the results.

In various embodiments, the documentation and information provided by computer system validation module 1000 can provide clear, step by step instruction so that the end-user learns through actions in addition to instruction

FIG. 2 is a flow diagram of a method 2000 of performing computer system validation operations, in accordance with various embodiments. Although the operations of the method 2000 may be illustrated with reference to particular embodiments disclosed herein (e.g., the computer system validation modules 1000 discussed herein with reference to FIG. 1, the GUI 3000 discussed herein with reference to FIG. 3, the computing devices 4000 discussed herein with reference to FIG. 4, and/or the computer system validation system 5000 discussed herein with reference to FIG. 5), the method 2000 may be used in any suitable setting to perform any suitable computer system validation operations. Operations are illustrated once each and in a particular order in FIG. 2, but the operations may be reordered and/or repeated as desired and appropriate (e.g., different operations performed may be performed in parallel, as suitable).

At 2002, first operations may be performed. For example, the first logic 1002 of a validation module 1000 may perform the operations of 2002. The first operations may include providing a graphical user interface to enable a user to select a set of selected requirements from a plurality of available requirements. In various embodiments, the first operations can include directing the user as to dependencies between requirements, such as by visually drawing attention to and/or automatically selecting related requirements. In various embodiments, the first operations may include changing text color or background color around a related requirement, drawing a circle or box around a related requirement, providing other visual indicator, or any combination thereof.

In various embodiments, the first operations can include identifying conflicting requirements, such as by identifying conflicting options when a first option is selected. For example, the first logic 1002 can gray the text, strike through the text, or otherwise indicating the conflicting option. In various embodiments, the first operations may include prohibiting selection of an option that conflicts with a previously selected option. Alternatively, the first operations can include providing information to inform the user when conflicting options are selected, such as by visually indicating the conflicting options and providing text to indicate why the options are in conflict, enabling the user to determine which option should be chosen.

In various embodiments, the first operations can include making additional options available when prerequisite options are selected, such as by dynamically adding to the list. For example, certain instrument specific requirements may be populated only after the specific instrument is selected. In other examples, certain regulatory requirements may be populated depending on the regulatory regime selected.

At 2004, second operations may be performed. For example, the second logic 1004 of a validation module 1000 may perform the operations of 2004. The second operations may include selecting a set of procedures to satisfy the need to test against each of the selected requirements and document evidence of the outcomes and generate a set of documents for installing and configuring the system and test protocols including all methods and objects needed to validate the system. Based on the selections and configurable information, the second operations can include automatically generating instructions including files necessary to apply the desired configuration of the business application. The second operations can include generate the Installation Qualification, Operational Qualification, Performance Qualification, System Manual, and Traceability Matrix documentation. The second operations can include utilizing the list of requirements and configuration options selected by the user and cross reference predefined sections of text and a predefined order to generate the final expected documentation. In various embodiments, a database can be used to store the predefined sections of text and predefined ordering related to the plurality of available requirements.

In various embodiments, the second operations can include consolidating or removing duplicate or redundant procedures. For example, configuration or testing of a particular subsystem may be required to meet two or more selected requirements. Rather than including the instructions for configuration or testing of the particular subsystem multiple times, the second operation can include providing one set of instructions for configuration or testing of the particular system rather than repeating those steps in multiple locations of the documentation.

In various embodiments, the second operations can include building user management files for system being validated.

At 2006, third operations may be performed. For example, the third logic 1006 of a support validation 1000 may perform the operations of 2006. The third operations may include providing the documentation for installing and configuring the system and test protocols including all methods and objects needed to validate the system generated during the second operations to the user. In various embodiments, the third operations can include making the set of documents available for download. Further, the third operations can include providing a mechanism for payment prior to making the set of documents available. Additionally, the third operations can include providing a mechanism for reviewing at least a portion of the set of documents prior to payment.

At 2008, optional fourth operations may be performed. For example, the fourth logic 1008 of a validation module 1000 may perform the operations of 2008. The fourth operations may include maintaining a record of the end-user's selections and documentation. Additionally, the fourth operations can include highlighting changes in recent releases of the application and making recommendations on retesting or regression testing from within the customers already purchased documentation. The fourth operations can also include advising on any new documentation or information that needs to be purchased.

The self-directed computer system validation methods disclosed herein may include interactions with a human user (e.g., via the user local computing device 5020 discussed herein with reference to FIG. 5). These interactions may include providing information to the user (e.g., information regarding the available requirements) or providing an option for a user to input commands (e.g., to select a subset of the available requirements), review at least a portion of the generated set of documents, queries (e.g., to a local or remote database), or other information. In some embodiments, these interactions may be performed through a graphical user interface (GUI) that includes a visual display on a display device (e.g., the display device 4010 discussed herein with reference to FIG. 4) that provides outputs to the user and/or prompts the user to provide inputs (e.g., via one or more input devices, such as a keyboard, mouse, trackpad, or touchscreen, included in the other I/O devices 4012 discussed herein with reference to FIG. 4). The self-directed computer system validation systems disclosed herein may include any suitable GUIs for interaction with a user.

FIG. 3 depicts an example GUI 3000 that may be used in the performance of some or all of the support methods disclosed herein, in accordance with various embodiments. As noted above, the GUI 3000 may be provided on a display device (e.g., the display device 4010 discussed herein with reference to FIG. 4) of a computing device (e.g., the computing device 4000 discussed herein with reference to FIG. 4) of a self-directed computer system validation system (e.g., the self-directed computer system validation system 5000 discussed herein with reference to FIG. 5), and a user may interact with the GUI 3000 using any suitable input device (e.g., any of the input devices included in the other I/O devices 4012 discussed herein with reference to FIG. 4) and input technique (e.g., movement of a cursor, motion capture, facial recognition, gesture detection, voice recognition, actuation of buttons, etc.).

The GUI 3000 may include an information display region 3002, a requirements selection region 3004, a document preview region 3006, and a purchase mechanism region 3008. The particular number and arrangement of regions depicted in FIG. 3 is simply illustrative, and any number and arrangement of regions, including any desired features, may be included in a GUI 3000.

The information display region 3002 may display information, such as information related to the available requirements. For example, the data display region 3002 may display guidance information for specific requirements, information about how requirements are related, such as dependencies or conflicts, and the like.

The requirements selection region 3004 may display a list of available requirements and provide a mechanism, such as a check box or radio button, to select a subset of requirements.

The document preview region 3006 may include options that allow the user to review at least a portion of the documents generated based on the selected requirements.

The purchase mechanism region 3008 may include options that allow for payment. For example, the purchase mechanism region 3008 may allow the user to provide payment information, such as a credit card information, electronic funds transfer information, or other information to enable payment.

As noted above, the self-directed computer system validation module 1000 may be implemented by one or more computing devices. FIG. 4 is a block diagram of a computing device 4000 that may perform some or all of the self-directed computer system validation methods disclosed herein, in accordance with various embodiments. In some embodiments, the self-directed computer system validation module 1000 may be implemented by a single computing device 4000 or by multiple computing devices 4000. Further, as discussed below, a computing device 4000 (or multiple computing devices 4000) that implements the self-directed computer system validation module 1000 may be part of one or more of the scientific instrument 5010, the user local computing device 5020, the service local computing device 5030, or the remote computing device 5040 of FIG. 5.

The computing device 4000 of FIG. 4 is illustrated as having a number of components, but any one or more of these components may be omitted or duplicated, as suitable for the application and setting. In some embodiments, some or all of the components included in the computing device 4000 may be attached to one or more motherboards and enclosed in a housing (e.g., including plastic, metal, and/or other materials). In some embodiments, some these components may be fabricated onto a single system-on-a-chip (SoC) (e.g., an SoC may include one or more processing devices 4002 and one or more storage devices 4004). Additionally, in various embodiments, the computing device 4000 may not include one or more of the components illustrated in FIG. 4, but may include interface circuitry (not shown) for coupling to the one or more components using any suitable interface (e.g., a Universal Serial Bus (USB) interface, a High-Definition Multimedia Interface (HDMI) interface, a Controller Area Network (CAN) interface, a Serial Peripheral Interface (SPI) interface, an Ethernet interface, a wireless interface, or any other appropriate interface) . For example, the computing device 4000 may not include a display device 4010, but may include display device interface circuitry (e.g., a connector and driver circuitry) to which a display device 4010 may be coupled.

The computing device 4000 may include a processing device 4002 (e.g., one or more processing devices). As used herein, the term "processing device" may refer to any device or portion of a device that processes electronic data from registers and/or memory to transform that electronic data into other electronic data that may be stored in registers and/or memory. The processing device 4002 may include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 4000 may include a storage device 4004 (e.g., one or more storage devices). The storage device 4004 may include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some embodiments, the storage device 4004 may include memory that shares a die with a processing device 4002. In such an embodiment, the memory may be used as cache memory and may include embedded dynamic random-access memory (eDRAM) or spin transfer torque magnetic random-access memory (STT-MRAM), for example. In some embodiments, the storage device 4004 may include non-transitory computer readable media having instructions thereon that, when executed by one or more processing devices (e.g., the processing device 4002), cause the computing device 4000 to perform any appropriate ones of or portions of the methods disclosed herein.

The computing device 4000 may include an interface device 4006 (e.g., one or more interface devices 4006). The interface device 4006 may include one or more communication chips, connectors, and/or other hardware and software to govern communications between the computing device 4000 and other computing devices. For example, the interface device 4006 may include circuitry for managing wireless communications for the transfer of data to and from the computing device 4000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. Circuitry included in the interface device 4006 for managing wireless communications may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). In some embodiments, circuitry included in the interface device 4006 for managing wireless communications may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some embodiments, circuitry included in the interface device 4006 for managing wireless communications may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some embodiments, circuitry included in the interface device 4006 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some embodiments, the interface device 4006 may include one or more antennas (e.g., one or more antenna arrays) to receipt and/or transmission of wireless communications.

In some embodiments, the interface device 4006 may include circuitry for managing wired communications, such as electrical, optical, or any other suitable communication protocols. For example, the interface device 4006 may include circuitry to support communications in accordance with Ethernet technologies. In some embodiments, the interface device 4006 may support both wireless and wired communication, and/or may support multiple wired communication protocols and/or multiple wireless communication protocols. For example, a first set of circuitry of the interface device 4006 may be dedicated to shorter-range wireless communications such as Wi-Fi or Bluetooth, and a second set of circuitry of the interface device 4006 may be dedicated to longer-range wireless communications such as global positioning system (GPS), EDGE, GPRS, CDMA, WiMAX, LTE, EV-DO, or others. In some embodiments, a first set of circuitry of the interface device 4006 may be dedicated to wireless communications, and a second set of circuitry of the interface device 4006 may be dedicated to wired communications.

The computing device 4000 may include battery/power circuitry 4008. The battery/power circuitry 4008 may include one or more energy storage devices (e.g., batteries or capacitors) and/or circuitry for coupling components of the computing device 4000 to an energy source separate from the computing device 4000 (e.g., AC line power).

The computing device 4000 may include a display device 4010 (e.g., multiple display devices). The display device 4010 may include any visual indicators, such as a heads-up display, a computer monitor, a projector, a touchscreen display, a liquid crystal display (LCD), a light-emitting diode display, or a flat panel display.

The computing device 4000 may include other input/output (I/O) devices 4012. The other I/O devices 4012 may include one or more audio output devices (e.g., speakers, headsets, earbuds, alarms, etc.), one or more audio input devices (e.g., microphones or microphone arrays), location devices (e.g., GPS devices in communication with a satellite-based system to receive a location of the computing device 4000, as known in the art), audio codecs, video codecs, printers, sensors (e.g., thermocouples or other temperature sensors, humidity sensors, pressure sensors, vibration sensors, accelerometers, gyroscopes, etc.), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 4000 may have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra mobile personal computer, etc.), a desktop computing device, or a server computing device or other networked computing component.

One or more computing devices implementing any of the self-directed computer system validation modules or methods disclosed herein may be part of a self-directed computer system validation system. FIG. 5 is a block diagram of an example self-directed computer system validation system 5000 in which some or all of the self-directed computer system validation methods disclosed herein may be performed, in accordance with various embodiments. The self-directed computer system validation modules and methods disclosed herein (e.g., the self-directed computer system validation module 1000 of FIG. 1 and the method 2000 of FIG. 2) may be implemented by one or more of the scientific instrument 5010, the user local computing device 5020, the service local computing device 5030, or the remote computing device 5040 of the self-directed computer system validation system 5000.

Any of the scientific instrument 5010, the user local computing device 5020, the service local computing device 5030, or the remote computing device 5040 may include any of the embodiments of the computing device 4000 discussed herein with reference to FIG. 4, and any of the scientific instrument 5010, the user local computing device 5020, the service local computing device 5030, or the remote computing device 5040 may take the form of any appropriate ones of the embodiments of the computing device 4000 discussed herein with reference to FIG. 4.

The scientific instrument 5010, the user local computing device 5020, the service local computing device 5030, or the remote computing device 5040 may each include a processing device 5002, a storage device 5004, and an interface device 5006. The processing device 5002 may take any suitable form, including the form of any of the processing devices 4002 discussed herein with reference to FIG. 4, and the processing devices 5002 included in different ones of the scientific instrument 5010, the user local computing device 5020, the service local computing device 5030, or the remote computing device 5040 may take the same form or different forms. The storage device 5004 may take any suitable form, including the form of any of the storage devices 5004 discussed herein with reference to FIG. 4, and the storage devices 5004 included in different ones of the scientific instrument 5010, the user local computing device 5020, the service local computing device 5030, or the remote computing device 5040 may take the same form or different forms. The interface device 5006 may take any suitable form, including the form of any of the interface devices 4006 discussed herein with reference to FIG. 4, and the interface devices 5006 included in different ones of the scientific instrument 5010, the user local computing device 5020, the service local computing device 5030, or the remote computing device 5040 may take the same form or different forms.

The scientific instrument 5010, the user local computing device 5020, the service local computing device 5030, and the remote computing device 5040 may be in communication with other elements of the self-directed computer system validation system 5000 via communication pathways 5008. The communication pathways 5008 may communicatively couple the interface devices 5006 of different ones of the elements of the self-directed computer system validation system 5000, as shown, and may be wired or wireless communication pathways (e.g., in accordance with any of the communication techniques discussed herein with reference to the interface devices 4006 of the computing device 4000 of FIG. 4). The particular self-directed computer system validation system 5000 depicted in FIG. 5 includes communication pathways between each pair of the scientific instrument 5010, the user local computing device 5020, the service local computing device 5030, and the remote computing device 5040, but this "fully connected" implementation is simply illustrative, and in various embodiments, various ones of the communication pathways 5008 may be absent. For example, in some embodiments, a service local computing device 5030 may not have a direct communication pathway 5008 between its interface device 5006 and the interface device 5006 of the scientific instrument 5010, but may instead communicate with the scientific instrument 5010 via the communication pathway 5008 between the service local computing device 5030 and the user local computing device 5020 and the communication pathway 5008 between the user local computing device 5020 and the scientific instrument 5010.

The scientific instrument 5010 may include any appropriate scientific instrument, such as a liquid chromatography instrument, a gas chromatography instrument, an ion chromatography instrument, a mass spectrometer, or any other scientific instrument that may be used for testing, such as quality control/quality assurance testing, in a regulated environment. In various embodiments, the scientific instrument can include associated accessories, such as pumps, autosampler, heaters, detectors, and the like.

The user local computing device 5020 may be a computing device (e.g., in accordance with any of the embodiments of the computing device 4000 discussed herein) that is local to a user of the scientific instrument 5010. In some embodiments, the user local computing device 5020 may also be local to the scientific instrument 5010, but this need not be the case; for example, a user local computing device 5020 that is in a user's home or office may be remote from, but in communication with, the scientific instrument 5010 so that the user may use the user local computing device 5020 to control and/or access data from the scientific instrument 5010. In some embodiments, the user local computing device 5020 may be a laptop, smartphone, or tablet device. In some embodiments the user local computing device 5020 may be a portable computing device.

The service local computing device 5030 may be a computing device (e.g., in accordance with any of the embodiments of the computing device 4000 discussed herein) that is local to an entity that services the scientific instrument 5010. For example, the service local computing device 5030 may be local to a manufacturer of the scientific instrument 5010 or to a third-party service company. In some embodiments, the service local computing device 5030 may communicate with the scientific instrument 5010, the user local computing device 5020, and/or the remote computing device 5040 (e.g., via a direct communication pathway 5008 or via multiple "indirect" communication pathways 5008, as discussed above) to receive data regarding the operation of the scientific instrument 5010, the user local computing device 5020, and/or the remote computing device 5040 (e.g., the results of self-tests of the scientific instrument 5010, calibration coefficients used by the scientific instrument 5010, the measurements of sensors associated with the scientific instrument 5010, etc.). In some embodiments, the service local computing device 5030 may communicate with the scientific instrument 5010, the user local computing device 5020, and/or the remote computing device 5040 (e.g., via a direct communication pathway 5008 or via multiple "indirect" communication pathways 5008, as discussed above) to transmit data to the scientific instrument 5010, the user local computing device 5020, and/or the remote computing device 5040 (e.g., to update programmed instructions, such as firmware, in the scientific instrument 5010, to initiate the performance of test or calibration sequences in the scientific instrument 5010, to update programmed instructions, such as software, in the user local computing device 5020 or the remote computing device 5040, etc.). A user of the scientific instrument 5010 may utilize the scientific instrument 5010 or the user local computing device 5020 to communicate with the service local computing device 5030 to report a problem with the scientific instrument 5010 or the user local computing device 5020, to request a visit from a technician to improve the operation of the scientific instrument 5010, to order consumables or replacement parts associated with the scientific instrument 5010, or for other purposes.

The remote computing device 5040 may be a computing device (e.g., in accordance with any of the embodiments of the computing device 4000 discussed herein) that is remote from the scientific instrument 5010 and/or from the user local computing device 5020. In some embodiments, the remote computing device 5040 may be included in a datacenter or other large-scale server environment. In some embodiments, the remote computing device 5040 may include network-attached storage (e.g., as part of the storage device 5004). The remote computing device 5040 may store data generated by the scientific instrument 5010, perform analyses of the data generated by the scientific instrument 5010 (e.g., in accordance with programmed instructions), facilitate communication between the user local computing device 5020 and the scientific instrument 5010, and/or facilitate communication between the service local computing device 5030 and the scientific instrument 5010.

In some embodiments, one or more of the elements of the self-directed computer system validation system 5000 illustrated in FIG. 5 may not be present. Further, in some embodiments, multiple ones of various ones of the elements of the self-directed computer system validation system 5000 of FIG. 5 may be present. For example, a self-directed computer system validation system 5000 may include multiple user local computing devices 5020 (e.g., different user local computing devices 5020 associated with different users or in different locations). In another example, a self-directed computer system validation system 5000 may include multiple scientific instruments 5010, all in communication with service local computing device 5030 and/or a remote computing device 5040; in such an embodiment, the service local computing device 5030 may monitor these multiple scientific instruments 5010, and the service local computing device 5030 may cause updates or other information may be "broadcast" to multiple scientific instruments 5010 at the same time. Different ones of the scientific instruments 5010 in a self-directed computer system validation system 5000 may be located close to one another (e.g., in the same room) or farther from one another (e.g., on different floors of a building, in different buildings, in different cities, etc.). In some embodiments, a scientific instrument 5010 may be connected to an Internet-of-Things (IoT) stack that allows for command and control of the scientific instrument 5010 through a web-based application, a virtual or augmented reality application, a mobile application, and/or a desktop application. Any of these applications may be accessed by a user operating the user local computing device 5020 in communication with the scientific instrument 5010 by the intervening remote computing device 5040. In some embodiments, a scientific instrument 5010 may be sold by the manufacturer along with one or more associated user local computing devices 5020 as part of a local scientific instrument computing unit 5012.

In some embodiments, different ones of the scientific instruments 5010 included in a self-directed computer system validation system 5000 may be different types of scientific instruments 5010; for example, one scientific instrument 5010 may be a gas chromatography instrument, while another scientific instrument 5010 may be a mass spectrometer. In some such embodiments, the remote computing device 5040 and/or the user local computing device 5020 may combine data from different types of scientific instruments 5010 included in a self-directed computer system validation system 5000.

## Claims

1. A method for self-directed computer system validation, comprising:
providing a graphical user interface to enable a user to select a set of selected requirements from a plurality of available requirements;
selecting a set of procedures to satisfy the need to test against each of the requirements and document evidence of the outcomes and generate a set of documents for installing and configuring the system and test protocols including all methods and objects needed to validate the system; and
providing the set of documents for installing and configuring the system and test protocols including all methods and objects needed to validate the system.

2. The method of claim 1, further comprising identifying requirements related to a selected requirement; and wherein, optionally,
providing the user with an indication of the related requirements.

3. The method of claim 1, further comprising adding the related requirements to the set of selected requirements.

4. The method of claims 1-3, further comprising providing the user with an indication of conflicting requirements.

5. The method of claims 1-4, further comprising accessing a database to retrieve predefined sections of text and a predefined order to generate the set of documents.

6. The method of claims 1-5, further comprising providing a mechanism for payment prior to providing the set of documents.

7. The method of claim 6, further comprising providing a mechanism for reviewing at least a portion of the set of documents prior to payment.

8. The method of claims 1-7, wherein the set of documents include user management files for the system being validated.

9. The method of claims 1-8, further comprising highlighting changes in recent releases of an application and making recommendations on retesting or regression testing from within already purchased documentation.

10. The method of claim 9, further comprising advising on any new documentation or information that needs to be purchased in response to a recent release of the application.

11. One or more non-transitory computer readable media having instructions thereon that, when executed by one or more processing devices of a system for self-directed computer system validation, cause the system for self-directed computer system validation to perform the method of claims 1-10.

12. A self-directed computer system validation apparatus, comprising:
first logic to receive the inputs, the inputs including a set of selected requirements from a plurality of available requirements; and
second logic to generate the outputs based at least in part on the inputs, the outputs including documentation for installation and configuring the scientific instrument and test protocols including all methods and objects needed to validate the system.

13. The apparatus of claim 12, wherein the first logic is to:
(a) receive the inputs from a user computing device; or
(b) receive the inputs in the form of a bulk upload or in the form of selections via a user interface.

14. The apparatus of claims 12-13, wherein the second logic further includes building user management files for the system being validated.

15. The apparatus of claims 12-14, wherein the outputs further include changes in recent releases of an application and recommendations on retesting or regression testing.
